# EUROPÄISCHE PATENTSCHRIFT

(11) **EP 1 300 053 B1**
(45) Veröffentlichungstag und Bekanntmachung des Hinweises auf die Patenterteilung: **03.08.2005**
(21) Anmeldenummer: 01938239.9
(22) Anmeldetag: 25.05.2001
(51) Int. Cl.: H05B 33/08, H05B 39/04, G08G 1/095

(54) **LED-LICHTQUELLE**
LED LIGHT SOURCE
SOURCE LUMINEUSE A DIODE ELECTROLUMINESCENTE

(30) Priorität: 25.05.2000 DE 10025821
(43) Veröffentlichungstag der Anmeldung: 09.04.2003
(73) Patentinhaber: Sickinger, Monika, 82041 Oberhaching (DE)
(72) Erfinder: VOLLRATH, Edmund, 83558 Maitanbeth (DE)
(74) Vertreter: Klunker . Schmitt-Nilson . Hirsch
(86) Internationale Anmeldenummer: PCT/EP2001/006011
(87) Internationale Veröffentlichungsnummer: WO 2001/091521

(56) Entgegenhaltungen:
- EP-A- 0 706 305
- DE-A- 4 022 498
- DE-A- 19 726 690
- US-A- 5 850 126

## Beschreibung

Gegenstand der Erfindung ist eine LED-Lichtquelle, aufweisend:
(a) einen Eingang zum Anschluß einer Stromquelle;
(b) ferner, auf Potentialniveaus zwischen dem oberen Potential und dem Basispotential:
   - einen Strang von mehreren, in Reihe geschalteten LEDs;
   - eine Spule, die in Reihe mit den LEDs vorgesehen ist;
   - eine Freilaufdiode, die parallel zu den LEDs und der Spule vorgesehen ist und deren Durchlaßrichtung der Durchlaßrichtung der LEDs entgegengesetzt ist;
   - und einen schnellen elektronischen Schalter, der in Reihe mit den LEDs, der Spule und der zu den LEDs und der Spule parallelen Freilaufdiode vorgesehen ist;
(c) und einen Impulsgeber, der an den schnellen elektronischen Schalter angeschlossen ist und Impulse erzeugt, die den schnellen elektronischen Schalter öffnen und schließen,
   dadurch gekennzeichnet,
(d) daß mehrere parallel geschaltete Stränge vorgesehen sind, die jeweils mehrere in Reihe geschaltete LEDs enthalten;
(e) daß eine gemeinsame Spule für die Stränge von LEDs vorgesehen ist;
(f) und daß der Impulsgeber ein Pulsbreiten-Modulator in Form eines integrierten Bauteils oder ein Frequenzmodulator in Form eines integrierten Bauteils ist.

Eine LED-Lichtquelle mit den Merkmalen (a), (b) und (c) ist aus DE 40 22 498 A1 bekannt. Dort ist ein explosionsgeschützter Leuchtmelder mit einem Universalnetzteil beschrieben, wobei der Leuchtmelder einige wenige LEDs zeigt, die in Reihe mit einer Spule parallel zu einer Freilaufdiode angeordnet sind, wobei die LEDs, die Spule und die Freilaufdiode in Reihe mit einem schnellen elektronischen Schalter vorgesehen sind. Ferner ist ein Impulsgeber vorgesehen, der an den schnellen elektronischen Schalter angeschlossen ist und Impulse erzeugt, die den schnellen elektronischen Schalter öffnen und schließen. Insbesondere handelt es sich bei dem Impulsgeber um einen monostabilen Multimodulator, der aus einer Mehrzahl von einzelnen Bauelementen aufgebaut ist.

Der Erfindung liegt die Aufgabe zugrunde, eine LED-Lichtquelle der beschrieben Art bereitzustellen, die eine verlustarme, platzsparende, ausfallsichere und kostengünstige Konstantstromversorgung für die LEDs besitzt.

Eine LED-Lichtquelle mit mehreren parallel geschalteten Strängen, die jeweils mehrere in Reihe geschaltete LEDs enthalten, ist aus DE 197 29 690 A1 bekannt. Bei dieser LED-Lichtquelle ist keine in Reihe mit den LEDs geschaltete Spule vorhanden.

Weiterer Gegenstand der Erfindung ist eine Verkehrssignalanlage, die mindestens eine erfindungsgemäße LED-Lichtquelle aufweist. In der nachfolgenden Beschreibung wird in erster Linie auf dieses bevorzugte Einsatzgebiet der LED-Lichtquelle bei Verkehrssignalanlagen eingegangen.

Verkehrssignalanlagen sind weltweit verbreitet im Einsatz. Grundsätzlich ist im Zusammenhang mit dem vorliegenden Patent der Begriff "Verkehrssignalanlage" breit auszulegen. Darunter sollen Straßen- und Schienenverkehrssignalanlagen ebenso fallen wie Schiffahrtsweg- und Landebahnbefeuerungen. Gerade bei den Straßenverkehrssignalanlagen sollen darunter neben den typischen Signalanlagen, wie Ampeln, auch beleuchtete Verkehrsleitsysteme und Beschilderungen zählen.

Derartige Verkehrssignalanlagen werden typischerweise von kommunalen oder staatlichen Betreibern betrieben, bei denen neben den Kosten für die Anfangsinstallation die Betriebs- und Wartungskosten eine sehr erhebliche Rolle spielen. So ist ein wesentlicher Kostenfaktor bei derartigen Verkehrssignalanlagen mit üblichen Glühlampen der relativ häufig erforderliche Austausch dieser Lampen. Ein weiterer nicht zu unterschätzender Kostenfaktor liegt in dem Energiebedarf der üblichen Lichtquellen. In Anbetracht dieser Problematik wurde bereits vorgeschlagen, in Verkehrssignalanlagen LED-Lichtquellen einzusetzen. So beschreiben beispielsweise US-A-5,850,126 und DE 197 29 690 A1 Lichtsignalanlagen bzw. Ampelanlagen mit LED-Lichtquellen. Beide Schriften schlagen einen Transformator vor, um die Spannung von dem Niveau der typischen öffentlichen Stromnetze auf das deutlich niedrigere Niveau herunterzutransformieren, auf dem ein sinnvoller Betrieb der LEDs möglich ist. Transformatoren sind aus mehreren Gründen mit Nachteilen verbunden. Erstens sind sie relativ groß und schwer, was häufig in der Praxis zu Problemen bei der Installation des Transformators in der Verkehrssignalaniage führt. So schlagen die beiden genannten Schriften zwar die Installation des Transformators in der eine übliche Lampenfassung aufweisenden LED-Lichtquelle vor. In der Realität sind diese Lichtquellen doch um einiges größer als die üblichen Standardlichtquellen, so daß der einfache Austausch üblicher Glühlampen durch LED-Lichtquellen häufig daran scheitert. Ein weiterer Punkt ist der nicht unerhebliche Kostenfaktor, der mit dem Einsatz von Transformatoren verbunden ist.

Durch die Erfindung werden eine Verkehrssignalanlage und eine speziell auf den Einsatz in Verkehrssignalanlagen optimierte LED-Lichtquelle geschaffen, die sich problemlos innerhalb der Außenabmessungen einer Standardglühlampe für Verkehrssignalanlagen unterbringen läßt, die durch die Verwendung einer extrem geringen Anzahl an Einzelbauelementen extrem ausfallsicher ist und die infolge der Verwendung von handelsüblichen Standardbauteilen kostengünstig hergestellt werden kann. Da bei dieser Schaltung der übliche Vorwiderstand für die LEDs entbehrlich ist und infolge der Verwendung eines stromsparenden Standardbauteils läßt sich ein verlustarmer, kostengünstiger Betrieb der Verkehrssignalanlage realisieren.

Bei einer erfindungsgemäßen Verkehrssignalanlage lassen sich die Austauschintervalle um den Faktor 2 oder mehr verlängern, was zu einer Halbierung oder noch stärkeren Reduzierung der üblichen Wartungskosten führt. Andererseits macht sich auch der deutlich geringere Energieverbrauch der LEDs bei den laufenden Betriebskosten solcher Verkehrssignalanlagen deutlich bemerkbar. Dazu kommt, daß sich durch die Verwendung von farblich passenden Lichtquellen, beispielsweise roten, gelben und grünen LEDs in Ampelanlagen die Energieausnutzung weiter verbessern läßt. So ist der Lichtverlust in den entsprechenden Farbfiltern (Filter für grünes Licht, Filter für rotes Licht, Filter für gelbes Licht) äußerst gering, wenn die Lichtquelle ein Emissionsspektrum in etwa im Bereich der Wellenlänge des Farbfilters hat. Aus zwei Gründen ist es dennoch vorteilhaft, die Farbfilter beizubehalten. Einerseits spielt hier der schon erwähnte Gesichtspunkt der einfachen Austauschbarkeit der konventionellen Lampen durch die erfindungsgemäße Lichtquelle eine Rolle. Andererseits können die Filter dazu dienen, Streulicht, beispielsweise durch Sonneneinstrahlung, drastisch zu reduzieren. Das gilt insbesondere dann, wenn die Filter in ihrem Durchlaßbereich an das sehr schmale Frequenzband der LEDs angepaßt sind. Desweiteren dienen die Filter als ein Schutz für die LED-Lichtquelle.

Gerade im Zusammenhang mit den Verkehrssignalanlagen ist die Verwendung der Lichtquelle mit üblichen Befestigungssockeln, so wie sie bei Lichtquellen in Verkehrssignalanlagen auch jetzt schon üblich sind, besonders bevorzugt. Vorzugsweise sind für ein Beleuchtungsfeld einer Verkehrssignalanlage, beispielsweise das rote, gelbe oder grüne Farbfeld einer Ampel, mindestens zwei separate Lichtquellen, die mit einem gemeinsamen Befestigungssockel versehen sein können, vorgesehen. Beim Ausfall einer Lichtquelle stellt die zweite Lichtquelle sicher, daß kein Totalausfall eintritt.

LEDs - lichtemittierende Dioden - haben einen sehr hohen Wirkungsgrad, was die Umsetzung von Strom in Licht angeht. Besonders hoch ist dieser Wirkungsgrad bei LEDs für grünes Licht. Aber auch sogenannte "Weißlicht-LEDs" haben einen, insbesondere im Verhältnis zu Glühlampen, sehr guten Wirkungsgrad. Der Wirkungsgrad von besonders guten LEDs, die heute schon am Markt angeboten werden, übertreffen zum Teil schon den von Leuchtstoffröhren, die generell als die Lichtquelle mit dem besten Wirkungsgrad angesehen werden. Der hohe Wirkungsgrad der LEDs und ihre durch ihre lange Lebensdauer bedingte hohe Ausfallsicherheit machen sie für bestimmte Anwendungen besonders geeignet. Neben den typischen Wohn- und Geschäftsraumbeleuchtungen zählen zu solchen Anwendungen typischerweise Beleuchtungen von Anzeigetafeln, Nachtbeleuchtungen, beispielsweise in Hotels oder Krankenhäusern, Notbeleuchtungen und ähnliche Beleuchtungsinstallationen, bei denen es nicht in erster Linie auf einen gebündelten kräftigen Lichtstrahl ankommt. LEDs haben darüberhinaus den großen Vorteil, daß sie sehr flexibel zu Leuchtanordnungen 2-dimensionaler und 3-dimensionaler Art zusammenstellbar sind. Das ermöglicht große, flache und in ihrer Ausdehnung gleichmäßig hell ausgeleuchtete Lichtanordnungen, wie sie insbesondere als Leuchtreklamen Verwendung finden können. Insbesondere bei Leuchtreklamen kommt die Verfügbarkeit der LEDs in unterschiedlichen Farben vorteilhaft zum Tragen.

Anders als Glühlampen, die je nach ihrer Auslegung auf beliebigem Spannungsniveau betreibbar sind, ist die Betriebsspannung einer LED aufgrund der physikalischen Gegebenheiten in einem relativ engem Bereich festgelegt. Typischerweise hat eine LED eine Betriebsspannung von etwa 2 Volt. Darin liegt auch ein Manko was die Anwendung von LEDs für die oben genannten Verwendungen betrifft. Die Betriebsspannung der LEDs befindet sich weit weg von der durch die öffentlichen Stromnetze gelieferten Netzspannung von typischerweise 110 bzw. 230 Volt Wechselspannung. Um diesem Problem wenigstens in einem gewissen Masse aus dem Weg zu gehen, werden LEDs häufig in einer Reihenschaltung von 20 oder mehr LEDs hintereinander betrieben, womit für typische Anwendungen auch eine ausreichende Lichtintensität erreicht wird. Diese Reihenschaltung führt zu einer Betriebsspannung im Bereich von 40 Volt für diese Gruppe von 20 hintereinandergeschalteten LEDs. Auch dieser Wert unterscheidet sich deutlich von der normalerweise zur Verfügung stehenden Netzspannung, so daß die Spannung für den LED-Betrieb entweder mit einem Transformator entsprechend heruntertransformiert werden muß oder ein großer Vorwiderstand die Spannung in diesen Bereich bringt. Es liegt auf der Hand, daß diese Spannungsanpassung mit großen Verlusten behaftet ist und entsprechend der Gesamtwirkungsgrad einer LED-Lichtquelle überaus schlecht wird. Was in der Praxis den Abstand von der zur Verfügung stehenden Netzspannung zu der Betriebsspannung der LEDs noch weiter vergrößert, ist die Tatsache, daß LEDs typischerweise mit Gleichspannung betrieben werden. Der Mittelwert der gleichgerichteten Netzspannung liegt bei etwa 150 Volt bzw. 320 Volt.

Auch bei Anwendungen, bei denen die Netzspannung auf die erforderliche Betriebsspannung für die in Reihe geschaltete Gruppe von LEDs heruntertransformiert ist, ist ein in Reihe mit den LEDs geschalteter Vorwiderstand erforderlich. Der Betrieb der LEDs ohne einen derartigen Vorwiderstand würde dazu führen, daß der Strom durch die LEDs ansteigen würde und diese schließlich zerstört werden würden. Durch das Vorschalten des Vorwiderstands wird der Stromanstieg in der LED durch einen höheren Spannungsabfall am Vorwiderstand kompensiert.

Daraus ergibt sich, daß der günstige Wirkungsgrad der LED für die Umsetzung von Strom zu Licht durch die betriebsbedingten Verluste im Vorwiderstand sowie gegebenenfalls bei der Transformation beeinträchtigt wird, was die Einsatzmöglichkeiten von LEDs massiv behindert. Dazu kommt, daß die erforderliche Betriebsspannung typischer LED-Lichtquellen für den Betrieb an der Spannung des öffentlichen Netzes, insbesondere nach Gleichrichtung, nicht geeignet ist. Die Verwendung von Transformatoren zur Spannungsanpassung ist einerseits mit Kostenaufwand verbunden und andererseits auch aus Platzgründen nicht immer leicht realisierbar oder nicht wünschenswert, wohingegen ein größerer Vorwiderstand zu deutlich höheren Verlusten führt.

Kernbestandteil der LED-Lichtquelle ist die Schaltung, in der die mindestens eine LED in Reihe mit der Spule und parallel dazu die Freilaufdiode mit ihrer Durchlaßrichtung entgegengesetzt zu der Durchlaßrichtung der LED(s) angeordnet ist. In dieser Schaltung fungiert die Spule als Stromspeicher. Einmal aufgeladen, ist sie bestrebt, den Stromfluß in dem Stromkreis durch die LED(s) und die Freilaufdiode aufrechtzuerhalten. Über den schnellen elektronischen Schalter wird dieser Stromkreis in bestimmten Abständen an die Stromquelle angeschlossen und "aufgeladen". Bei Betrieb liegt damit an der mindestens einen LED ein Strom an, der um einen bestimmten Mittelwert des Stroms mit der Frequenz, mit der der Schalter betätigt wird, variiert. Diese Strom-Variation kann relativ klein sein verglichen mit dem Mittelwert des Stroms. Sie kann aber auch relativ groß sein. Im Extremfall kann die mindestens eine LED mit einer Vielzahl von Stromimpulsen mit einer Wiederholfrequenz, die mindestens so groß ist, daß die Lichtquelle vom Auge flackerfrei empfunden wird, gespeist werden. Zwischen den einzelnen Impulsen kann die Stromstärke bis auf Null abfallen. Der Energieinhalt der Stromimpulse ist günstigerweise so bemessen, daß die der mindestens einen LED bereitgestellte Energie im wesentlichen gleich der bei Konstantbetrieb benötigten Energie ist. In der Praxis kann es bei einem derartigen Betrieb sogar eine Wirkungsgradverbesserung geben, da bekannt ist, daß mit höherem Strom gepulst betriebene LEDs einen besseren Lichtwirkungsgrad haben. Durch die optimale Anpassung der einzelnen Bauteile kann der Fachmann einen im wesentlichen konstanten Strom auf die optimale Betriebsstromstärke der LEDs einstellen. Bei dieser optimalen Stromstärke hat eine LED ihre maximale Lebensdauer bzw. ihre im Verhältnis zur Lebensdauer optimale Lichtausbeute. Die optimale Stromstärke für die optimale Lebensdauer bzw. die für die optimale Lichtausbeute müssen bei einer LED nicht unbedingt gleich sein.

Der Impulsgeber legt an den schnellen elektronischen Schalter einen Impulszug an, der zu dem gewünschten Strom durch die LEDs führt. Der schnelle elektronische Schalter kann beispielsweise ein MOSFET-Transistor sein, wobei die Impulszüge des Impulsgebers an das Gate des MOSFET-Transistors angeschlossen sein können.

Die zusätzlichen Verluste der zusätzlich zu der LED vorgesehenen Bauteile in der LED-Lichtquelle sind äußerst gering. Verluste treten lediglich in der Spule, in der Freilaufdiode, in dem Schalter sowie in dem Impulsgeber auf. Die Verluste in der Spule sind im wesentlichen rein Ohm'sche Verluste. Bei einem typischen Widerstand von etwa 6 Ohm für die Spule kommt es bei den typischen Strömen von etwa 20 Milliampère zu einem Spannungsabfall von etwa 120 Millivolt über die Spule, was zu entsprechend kleinen Verlusten führt. Als Freilaufdiode eignet sich insbesondere eine Schottky-Diode, die sehr schnell auf Durchlaß schaltet und eine niedrige Durchlaßspannung hat. Der Spannungsabfall über diese Diode beträgt etwa 0,3 - 0,4 Volt. Der schnelle elektronische Schalter hat typischerweise einen Widerstand von 1 bis 2 Ohm. Auch das führt nur zu einem Spannungsabfall in der Größenordnung von etwa 20 Millivolt über den Schalter.

Der mögliche Energieeinsparungseffekt soll nachfolgend anhand eines einfachen Beispiels veranschaulicht werden. Dabei wird der Fall des herkömmlichen Betriebs mit Vorwiderstand mit dem erfindungsgemäßen Betrieb bei im wesentlichen konstanten Strom durch die LEDs verglichen. Das Beispiel geht von 20 in Serie geschalteten LEDs mit einer LED-Betriebsspannung von 2 V aus, die bei Netzspannung von 230 V Wechselstrom, entsprechend einem Gleichstrom von 320 V Spannung betrieben werden. Der Strom durch die LEDs beträgt 10 mA.

Herkömmlicher Betrieb mit Vorwiderstand:
- Wirksame Leistung an den Dioden 20 x 2 V x 0,01 A = 0,4 W
- Aufgenommene Leistung 320 V x 0,01 A = 3,2 W
- Wirkungsgrad 12,5%

Betrieb mit erfindungsgemäßer Schaltung:
- Bei der gesamten Schaltung läßt sich ein Wirkungsgrad von 85% realisieren, Verluste treten insbesondere bei der Gleichrichtung, durch den Betrieb des Impulsgebers, in dem elektrischen Schalter und den weiteren Bauteilen auf.
- Wirksame Leistung an den Dioden 20 x 2 V x 0,01 A = 0,4 W/0,85 = 0,47 W (kleiner als 1/6 der bei herkömmlichem Betrieb aufgenommene Leistung)
- Dem Netz entnommener Strom 0,47 W/230 V = 0,002 A

Wie man unschwer erkennt, ist der Wirkungsgrad bei erfindungsgemäßem Betrieb annähernd um den Faktor 7 besser als bei herkömmlichem Betrieb. Diese Verbesserung des Wirkungsgrads kann mit einer einfachen, billigen, zuverlässigen und platzsparenden Schaltung realisiert werden.

Die LED-Lichtquelle läßt sich für Beleuchtungen unterschiedlichster Art verwenden. Wie nachfolgend noch geschildert werden wird, hat man die Möglichkeit, mit dieser Lichtquelle unterschiedlichste Lichtfarben zu erzeugen. Durch den Einsatz von Weißlichtdioden läßt sich eine solche Lichtquelle auch anstelle von üblichen Glühlampen verwenden. Besonders bevorzugt sind Notbeleuchtungen, beispielsweise in Gebäuden wie Tiefgaragen, Hotels oder in Fahrzeugen wie Schiffen, Schienenfahrzeugen, Flugzeugen. Besonders geeignet sind sie für gleichmäßige indirekte Beleuchtungen, beispielsweise Treppenhäuser, Tiefgaragen, etc. Sie eignen sich insbesondere auch als ausfallsichere Positionsbeleuchtungen, beispielsweise bei Flugzeugen und Schiffen.

Die LED-Lichtquelle kann beispielsweise als Ersatz für übliche vorhandene Lichttquellen verwendet werden. So kann sie beispielsweise einen üblichen Schraub-, Steck- oder anderen Sockel aufweisen, der in übliche Fassungen eingebracht werden kann. Dabei kann die Schaltung beispielsweise in der Fassung einteilig mit der LED vorgesehen sein. Alternativ kann die Schaltung als ein Zwischenstück separat ausgebildet sein, in welches die mindestens eine LED eingesteckt, eingeschraubt oder sonstwie daran angeschlossen werden kann. Dieses Zwischenstück kann entweder teleskopisch, d.h. in der Form eines zylindrischen Mantels, um ein die mindestens eine LED abstützendes Kemelement herum angeordnet sein, wobei das Zwischenstück dann beispielsweise in eine Fassung eingeschraubt wird und selbst als Fassung für die mindestens eine LED dient. Alternativ kann das Zwischenstück auch axial im Anschluß an die mindestens eine LED angeschlossen sein. Die spezielle Ausführungsform hängt von dem speziellen Anwendungsgebiet ab. Auch Mischformen zwischen teleskopischer und axialer Ausbildung des Zwischenstücks sind möglich. So ist beispielsweise bei einer Lichtquelle, die in eine übliche Schraubfassung eingeschraubt werden kann, eine Mischform mit teilweiser teleskopischer und teilweise axialer Ausbildung günstig, die um die Abstützung für die mindestens eine LED in der Art eines Bechers herum angeordnet ist. Es wird darauf hingewiesen, daß diese Lichtquelle mit Zwischenstück und auch das Zwischenstück alleine jeweils für sich selbst betrachtet als erfinderisch angesehen werden.

Es ist besonders günstig, wenn die Lichtquelle so ausgebildet ist, daß sie in ihrer Form einer gebräuchlichen Lichtquelle entspricht, z.B. übliche Glühbirne, stabförmige, gebogene Neonröhren, etc. Besonders bei Lichtquellen, bei denen eine gerichtete Abstrahlung erwünscht ist, kann in dieser vorgegebenen Form die Anordnung der LEDs derart vorgesehen sein, daß sich die gewünschte Licht-Abstrahlungscharakteristik ergibt. Das ist besonders günstig bei Neonröhren, die als Straßenbeleuchtungen oder Deckenbeleuchtung verwendet werden. Hier ist es momentan typischerweise so, daß die Neonröhren selbst in der Art einer gebogenen oder geraden zylinderförmigen Röhre ausgebildet sind, und radial um ihren Längsverlauf herum im wesentlichen eine gleiche Abstrahlcharakteristik aufweisen. Die Straßenlaternen selbst sind deshalb mit einem Reflektor ausgebildet, um das in unerwünschte Richtungen abgestrahlte Licht in die gewünschte Abstrahlrichtung zu reflektieren. Solche Reflektoren können häufig erblinden, sie führen zu Wirkungsgradverlusten und erhöhen die Anschaffungskosten. Es ist daher vorteilhaft, die gerichtete Abstrahlcharakteristik von LEDs dahingehend auszunutzen, die Lichtquelle selbst richtungsanisotrop derart zu gestalten, daß sich die gewünschte Licht-Abstrahlcharakteristik ergibt. Die Lichtquelle kann dabei entweder, wie das bei einer LED üblich ist, in einem Glaskolben angeordnet sein. Es kann jedoch auch auf den Glaskolben verzichtet werden und die mindestens eine LED unabgedeckt bleiben. Das ist besonders dann vorteilhaft, wenn die Lichtquelle von der Lampe selbst nach außen hin beispielsweise durch einen Glasschirm abgedeckt ist.

Es ist günstig, wenn insbesondere bei größeren Leuchtfeldern, beispielsweise bei den Leuchtfeldern einer Ampel oder bei Leuchtfeldern von Sicherheitsbeleuchtungen oder neonröhrenähnlichen Leuchtfeldern pro Leuchtfeld mindestens zwei separate Lichtquellen vorgesehen sind. Das erhöht die Ausfallsicherheit beträchtlich.

Als Impulsgeber kann ein Pulsbreiten-Modulator verwendet werden, wie sie in großen Stückzahlen hergestellt werden und entsprechend am Markt günstig zu erhalten sind. Besonders eignet sich dafür TL 5001 der Firma Texas Instruments. Der Strombedarf derartiger Bauteile liegt in der Größenordnung von Mikroampère. Entsprechend gering sind die Verluste.

Bei der Versorgungsschaltung ist weiterhin günstig, daß sie relativ unempfindlich gegenüber Änderungen bei der Eingangsspannung ist. Es ist möglich, diese Schaltung so auszulegen, daß sie, ohne daß ein Umschalten erforderlich ist, an den Netzspannungen 110 Volt bzw. 230 Volt Wechselspannung betreibbar ist.

Vorzugsweise ist mindestens eine der LEDs eine "Weißlicht-LED". Gerade für Beleuchtungszwecke, insbesondere als Nachtbeleuchtung, ist weisses Licht besonder bevorzugt. Dabei kann es sich bei den Weißlicht-LEDs entweder um solche LEDs handeln, bei denen auf einem Chip in einer Ebene mehrere LEDs mit unterschiedlichen Farben angeordnet sind. Typischerweise sind dabei vier LEDs - eine rote, eine grüne und zwei blaue - räumlich sehr eng beeinander angeordnet. Diese LEDs können in Reihenschaltung betrieben werden. Das Auge faßt das Licht dieser LEDs in additiver Mischung als eine bestimmte Lichtfarbe, d.h. bei der Reihenschaltung weißes Licht, auf. Es ist auch möglich, die LEDs der einzelnen Farben in einem separaten Stromkreis mit separater Spule und separater Freilaufdiode zu betreiben. Bei der Möglichkeit einer Regelung der Stromstärke in den einzelnen Stromkreisen hat man die Möglichkeit, die Farbe des Lichts dieser LEDs zu verändern. Seit kurzem sind auch Weißlicht-LEDs erhältlich, bei denen es sich um blaue LEDs handelt, die mit Phosphor beschichtet sind. Durch die blaue Strahlung der LEDs werden in dem Phosphor die Elektronen in höhere Energieniveaus angeregt und erzeugen bei der Rückkehr in den Grundzustand das weisse Licht.

Vorzugsweise ist der Impulsgeber so ausgebildet, daß er in Abhängigkeit von einer charakteristischen Größe für den durch die LEDs fließenden Strom in der Lage ist, unterschiedliche Impulszüge an den schnellen elektronischen Schalter zu geben, um den mittleren Strom durch die LEDs innerhalb eines konstanten Bereichs zu erhalten. Standardbauteile, wie sie vorangehend erwähnt wurden, haben häufig einen Feedback-Eingang, der es erlaubt, den Impulszug in Abhängigkeit von einer bestimmten Stellgröße zu ändern. Im vorliegenden Fall kann das dazu genutzt werden, um den Strom in einem bestimmten Bereich konstant zu halten. Das hat bei der praktischen Umsetzung der vorliegenden Erfindung den Vorteil, daß die Stabilität des von der Schaltung gelieferten Stroms verbessert ist, beispielsweise bei Temperaturänderung etc. Bei einfachen Bausteinen, die eine Änderung des Impulszuges auf andere Weise nicht zulassen, kann dieser Feedback-Eingang auch dazu verwendet werden, die Stromstärke auf den gewünschten Optimalwert einzustellen.

Vorzugsweise ist in Reihe mit dem schnellen elektronischen Schalter, der Spule und den LEDs ein Gesamtstrom-Meßwiderstand vorgesehen, über den der Strom durch die LEDs gemessen wird. Dieser Meßwiderstand kann annähernd beliebig klein sein, so daß auch hier nur sehr geringe Verluste auftreten. Insbesondere ist dieser Meßwiderstand deutlich kleiner als typische Vorwiderstände, wie sie bei den üblichen LED-Anwendungen verwendet werden. Hierbei ist die über den Meßwiderstand abfallende Spannung charakteristisch für den durch den Meßwiderstand fließenden Strom.

Die über den Meßwiderstand abfallende Spannung kann beispielsweise einem Operationsverstärker zugeführt werden, der abhängig von der ermittelnden Größe ein entsprechendes Signal an den Impulsgeber gibt, um so den schnellen elektronischen Schalter in Abhängigkeit von dem ermittelten Wert am Meßwiderstand korrekt zu beaufschlagen.

Die parallele Anordnung mehrerer LEDs hat einige Vorteile. Es ist grundsätzlich günstig, zur Erzeugung einer ausreichenden Lichtintensität eine Vielzahl von LEDs gemeinsam vorzusehen. Typischerweise werden solche LEDs aus den oben genannten Gründen häufig in Reihenschaltung vorgesehen. Der Nachteil der Reihenschaltung ist, daß bei dem Versagen einer LED die gesamte Reihe ausfällt und kein Licht mehr erzeugt. Damit in einem solchen Fall die LED-Lichtquelle nicht komplett ausfällt, ist es günstig, einzelne LEDs oder Reihen von LEDs parallel zu schalten. Fällt bei zwei oder mehr parallel geschalteten LEDs oder bei zwei oder mehr parallel geschalteten Reihen von LEDs eine LED oder eine Reihe von LEDs aus, so fließt zwar durch die restlichen LEDs ein höherer Strom, die LED-Lichtquelle fällt jedoch nicht komplett aus. Der höhere Strom führt generell zu einer Verringerung der Lebensdauer der teilbeschädigten LED-Lichtquelle. Dem Benutzer verbleibt eine gewisse "Schonfrist" bis die LED-Lichtquelle entgültig ausgetauscht werden muß. Das ist insbesondere bei sicherheitsrelevanten Anwendungen besonders günstig, da sich der Totalausfall der LED-Lichtquelle über einen gewissen Zeitraum vorher ankündigt. Es kann ganz besonders günstig sein, mehrere Reihen von LEDs parallel zueinander anzuordnen. Der Ausfall einer einzigen Reihe erhöht den Stromfluß durch die verbleibenden Reihen nicht wesentlich, so daß deren Lebensdauer nicht rapide abnimmt. Die entsprechende LED-Lichtquelle kann dann schon lange vor dem tatsächlichen Versagen ausgetauscht werden. Eine Prüfung einer solchen Lichtquelle kann durch die Messung des Widerstands in den einzelnen parallelen LED-Reihen erfolgen. Je nach der Anzahl der bis zu diesem Teilpunkt ausgefallenen Reihen von LEDs kann der Monteur dann bei einer Überprüfung entscheiden, ob die LED-Lichtquelle ausgetauscht werden muß oder nicht. Das ist besonders dann günstig, wenn die LED-Lichtquelle bei Verkehrssignalanlagen eingesetzt wird. Im Extremfall können sogar alle LEDs parallel zueinander vorgesehen sein.

Vorzugsweise ist es möglich, in den einzelnen parallelen Strompfaden mit jeweils einer oder mehreren LEDs einen für den Strom durch diesen speziellen Strompfad charakteristischen Wert zu erfassen. Das kann beispielsweise mittels eines Teilstrom-Meßwiderstands in Reihe mit der mindestens einen LED in einem solchen Strompfad erfolgen. Besonders bei wenigen parallelen Strompfaden kann dadurch der Ausfall einer LED in einem Strompfad festgestellt werden. Durch eine geeignete Logik werden diese charakteristischen Werte erfaßt und ausgewertet, und über den Impulsgeber werden der Gesamtstromfluß und damit der Stromfluß durch die verbleibenden LEDs auf einen relativ lebensdauerschonenden Wert für die verbleibenden LEDs abgesenkt oder gar auf den Optimalwert für diese LEDs zurückgeführt. So reicht beispielsweise bei nur zwei parallelen Strompfaden, in denen jeweils mindestens eine LED vorgesehen ist, der charakteristische Wert eines dieser Strompfade. Fällt beispielsweise der charakteristische Wert in einem dieser Strompfade auf Null ab, so ist klar, daß in diesem Strompfad eine LED ausgefallen ist. Der Strom durch den zweiten Strompfad kann dann entsprechend abgesenkt werden. Umgekehrt kann der Strom entsprechend abgesenkt werden, wenn er in diesem Strompfad plötzlich ansteigt. Bei mehreren parallelen Strompfaden ist es günstig, den charakteristischen Wert jedes einzelnen Strompfads zu erfassen.

Vorzugsweise erhält der Impulsgeber seine Stromversorgung, indem er an das hohe Potential und das Basispotential angeschlossen ist. Vorzugsweise ist zwischen dem hohen Potential und dem Basispotential ein Spannungsteiler mit einer zu dem Impulsgeber parallel vorgesehenen Stabilisierungsdiode zum Erzeugen einer im wesentlichen konstanten Versorgungsspannung für den Impulsgeber vorgesehen. Grundsätzlich ist es auch möglich, einen Spannungsteiler beispielsweise aus zwei Widerständen aufzubauen. Der Spannungsteiler mit der Stabilisierungsdiode hat jedoch den Vorteil, daß er eine im wesentlichen konstante Spannung für den Impulsgeber unabhängig von der zwischen dem hohen und dem Basispotential abfallenden Spannung zur Verfügung stellt. Hintergrund ist auch hier wieder die Möglichkeit, die Lichtquelle problemlos für das öffentliche Netz mit 110 Volt bzw. 230 Volt Wechselspannung einsetzen zu können. Das ist speziell auch aus wirtschaftlichen Gesichtspunkten vorteilhaft, wenn weltweit eine Art von LED-Lichtquelle verwendbar ist.

Vorzugsweise weist der Impulsgeber zur Stromversorgung einen Stromversorgungseingang auf, der an die Reihenschaltung von Verbraucherausgang, schnellem elektronischen Schalter und Spule angeschlossen ist. Gegenüber der vorangehend beschriebenen Alternative, bei der die Stromversorgung des Impulsgebers über einen Spannungsteiler von der Versorgungsspannung genommen wird, hat diese Art der Schaltung den Vorteil, besonders energiesparend zu sein, da die am Spannungsteiler automatisch auftretenden Verluste praktisch vollständig minimiert sind. Dabei ist es bevorzugt, daß dem Spannungsversorgungseingang des Impulsgebers vorgeschaltet eine Spannungsreglerschaltung vorgesehen ist. Die Spannungsreglerschaltung hat die Aufgabe, die am Versorgungsausgang anliegende relativ ungleichmäßige Spannung zu glätten, bevor sie dem integrierten Schaltkreis des Impulsgebers zugeführt wird.

Dabei ist es bevorzugt, wenn die Spannungsreglerschaltung einen Entkopplungskondensator aufweist. Das ist insbesondere dann günstig, wenn die über den Ausgang abgenommene Spannung verglichen mit der für den integrierten Schaltkreis erforderlichen Spannung, die in der Größenordnung von wenigen Volt liegt, um einen relativ hohen Gleichspannungswert schwankt. Der Entkopplungskondensator filtert in diesem Fall die relativ hohen Gleichspannungsanteile heraus und läßt nur Wechselspannungsanteile durch. Bei der Spannungsreglerschaltung ist es ferner bevorzugt, wenn ein Spannungsgleichrichter, beispielsweise eine Gleichrichterdiode, vorgesehen ist, welche die negativen Komponenten der Wechselspannung nach dem Entkopplungskondensator nicht durchläßt oder deren Vorzeichen ändert. Besonders günstig ist es dabei, wenn zwischen dem Entkopplungskondensator und dem Spannungsgleichrichter eine Niveaudiode angeschlossen ist, die das Spannungsniveau der Wechselspannung nach dem Entkopplungskondensator so verschiebt, daß diese im wesentlichen keine negativen Komponenten mehr aufweist.

Es ist ganz besonders bevorzugt, wenn die Spannungsreglerschaltung einen Spannungsregler-IC aufweist. Es gibt integrierte Schaltkreise, beispielsweise ein µA78L05CD Standard-IC, der von vielen Herstellern erhältlich ist, die die derart aufgearbeitete Spannung weiter glätten und für eine Verwendung als Stromversorgung für den integrierten Schaltkreis, der den Impulsgeber bildet, erlaubt.

Vorzugsweise ist die LED-Lichtquelle für den Anschluß direkt an das öffentliche Stromnetz vorgesehen und weist eine Gleichrichterschaltung auf, deren Ausgänge das hohe Potential und das Basispotential bilden. Eine solche Gleichrichterschaltung kann beispielsweise eine übliche Brückenschaltung sein, der vorzugsweise ein Kondensator zur Glättung der Spannungsspitzen zwischen dem hohen Potential und dem Basispotential zugeschaltet ist. Bei Verwendungen außerhalb des öffentlichen Netzes, beispielsweise auf Schiffen, in Flugzeugen, in Kraftfahrzeugen, oder in anderen Einrichtungen, beispielsweise Computern oder anderen elektrischen Anlagen, die entweder ein unabhängiges Gleichspannungsnetz haben, oder intern Strom einer bestimmten Gleichspannung bereitstellen, kann es auch sein, daß ein Gleichrichter nicht erforderlich ist.

Vorzugsweise ist der Impulsgeber so ausgebildet, daß die Wiederholfrequenz der Impulse größer ist als 70 Hz; Pulse die unter dieser Grenze liegen, werden von dem Auge erfaßt und sind für Beleuchtungszwecke nicht gut geeignet. Bei Anwendungen, bei denen es auf das Abgeben eines Blinksignals ankommt, ist jedoch auch eine niedrigere Wiederholfrequenz möglich und gegebenenfalls vorteilhaft. Vorzugsweise ist die Wiederholfrequenz aber größer als 130 Hz, bevorzugter größer als 400 Hz, noch bevorzugter größer als 1 Kilohertz und noch mehr bevorzugt größer als 10 Kilohertz. Ganz besonders bevorzugt sind Wiederholfrequenzen von über 100 Kilohertz. Je höher die Frequenz, desto kleiner kann die Spule dimensioniert sein und entsprechend kleiner kann der Schaltkreis aufgebaut sein. Das ist deshalb wichtig, weil die Spule ein relativ voluminöses Bauteil dieser Schaltung sein kann. Daneben sind Spulen mit zunehmender Induktivität zunehmend teuer.

Vorzugsweise hat die Spule eine Indiktivität von 0,1 bis 100 mH. Besonders günstig sind Spulen mit einer Induktivität von 1 bis 100 mH. Grundsätzlich ist eine genauere Angabe der Induktivität für die Spule nicht möglich. Sie hängt von der speziellen gewählten LED-Anordnung, der Versorgungsspannung, der Impulsfrequenz und anderen Faktoren ab. Der Wert kann für verschiedene Anordnungen und Anwendungen um den Faktor 1000 variieren.

Vorzugsweise ist der Impulsgeber verstellbar ausgebildet, so daß durch eine Änderung der Impulszüge die Intensität des Lichts variiert werden kann. Die Möglichkeit des Dimmens einer Beleuchtung, d.h. des Änderns von deren Helligkeit, ist häufig wünschenswert. In der Praxis kann das realisiert werden, indem entweder der Abstand zwischen einzelnen Impulsen, d.h. die Impulspausen, oder die Dauer die Impulse variiert wird.

Vorzugsweise ist die beschriebene Lichtquelle, d.h. die Anordnung aus LED(s), Spule, Freilaufdiode, elektrischem Schalter, Impulsgeber, eventuell Gleichrichterschaltung, etc. , mit einem üblichen Befestigungssockel versehen, der mit einer üblichen Befestigungsfassung verwendet werden kann. Das ermöglicht es, ohne die vorhandene Beleuchtungsstruktur zu ändern, bisher gebräuchliche Lampen beispielsweise Glühlampen, durch die erfindungsgemäße Lichtquelle zu ersetzen.

Besonders bevorzugt ist auch die Möglichkeit der Variation der Intensität des Lichts. Man kann sich leicht vorstellen, daß bei Verkehrssignalanlagen die Beleuchtigungsintensität im Tag- bzw. Nachtbetrieb deutlich unterschiedlich sein kann und muß. Tagsüber muß eine relativ hohe Intensität vorherrschen, um auch bei niedrigster Sonnenbestrahlung ein sicheres Erkennen des Signalzustands zu gewährleisten. Nachts hingegen ist darauf zu achten, daß die Beleuchtungsintensität nicht übermäßig ist, um ein Blenden von Verkehrsteilnehmern sicher zu verhindern. Der beschriebene Dimmeffekt kann hier vorteilhaft genutzt werden. Es ist sogar vorteilhaft, die Intensität abhängig von der tatsächlichen Lichtsituation jeweils momentan, beispielsweise mit einer Fotozelle, zu erfassen und die momentan erforderliche Lichtintensität der Signalanlage anhand dieser Information, beispielsweise automatisch, anzupassen. Selbst bei Tag ist mit einer derartigen Regelung nur selten ein Betrieb der Signalanlage erforderlich, bei dem höchste Intensität der Lichtquelle gefordert ist. Damit läßt sich die vorgenannte Energieeinsparung noch wesentlich erhöhen.

LED-Beleuchtungseinrichtungen eignen sich ganz besonders als Arbeitslampen, insbesondere dort, wo ein relativ intensives und relativ zielgerichtetes Licht erforderlich ist, und insbesondere dort, wo die zusätzliche Wärme, die konventionelle Lichtquellen erzeugen, extrem unerwünscht ist. Es seien in diesem Zusammenhang insbesondere Zahnarztlampen erwähnt, die besonders bevorzugt als LED-Beleuchtungseinrichtungen und insbesondere gespeist von der erfindungsgemäßen Vorrichtung den bisher verwendeten Arbeitslampen deutlich überlegen sind.

Für LED-Beleuchtungseinrichtungen ist insbesondere die vermehrt verwendete Chip on Board Technologie besonders geeignet, bei denen die einzelnen LEDs ohne ein eigenes Gehäuse auf einer Basisplatte angeordnet sind und mit einer dünnen Siliziumschicht abgedeckt sind. Damit können bis zu etwa 500 LEDs auf einem Board vorgesehen sein.

Die im Zusammenhang mit der Verkehrssignalanlage geschilderte LED-Lichtquelle eignet sich auch für andere Anwendungen, wie vorangehend schon ausgeführt wurde. Ferner eignet sich die bei der erfindungsgemäßen Verkehrssignalanlage verwendete Versorgungsschaltung zur Speisung der LEDs auch für andere Einsatzzwecke als für Beleuchtungszwecke, und insbesondere dort, wo aus verschiedensten Gründen der Einsatz von Transformatoren nicht erwünscht ist.

Die Erfindung und Ausgestaltungen der Erfindung werden nachfolgend anhand von zeichnerisch dargestellten Ausführungsbeispielen noch näher erläutert. Es zeigen:
- Fig. 1: schematisch den Aufbau einer LED-Lichtquelle, die allerdings nicht patentgemäß ist, weil nur ein LED-Strang vorhanden ist;
- Fig. 2: schematisch den Aufbau einer alternativen Ausführungsform der LED-Lichtquelle; und
- Fig. 3: den Schaltplan einer LED-Lichtquelle mit einer alternativen Stromversorgungsvorrichtung.

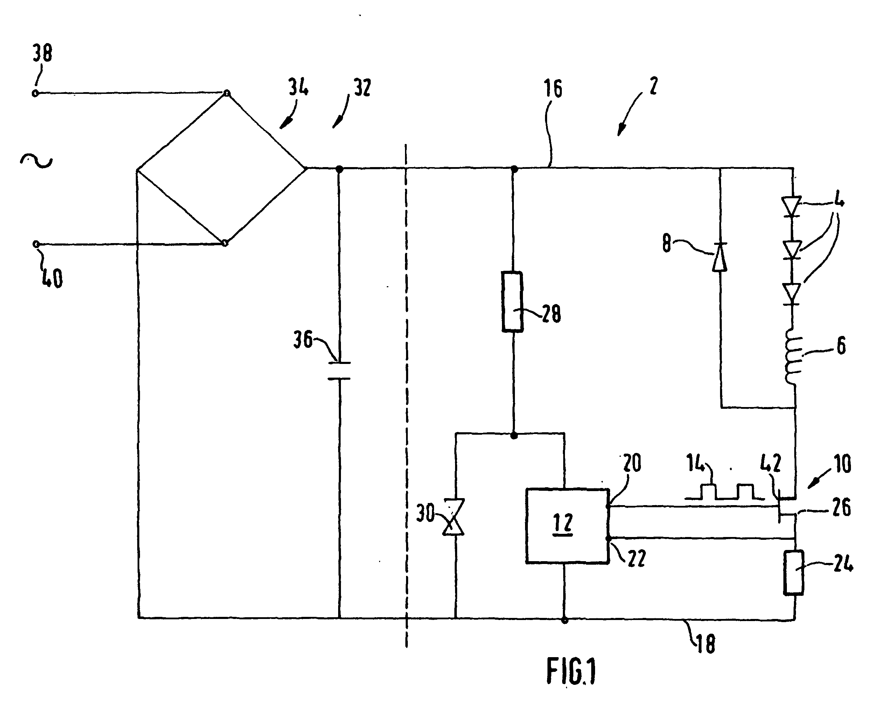

Fig. 1 zeigt eine LED-Lichtquelle 2 für eine Verkehrssignalanlage aufweisend eine Mehrzahl hintereinander geschalteter lichtemittierender Dioden (LEDs) 4, die mit einer Spule 6 in Reihe geschaltet sind. Parallel zu den LEDs und der Spule 6 ist eine Freilaufdiode 8 so angeordnet, daß ihre Durchlaßrichtung der Durchlaßrichtung der LEDs 4 entgegengesetzt ist. In Reihe mit den LEDs 4, der Spule 6 und der dazu parallelen Freilaufdiode 8 ist ein schneller elektronischer Schalter 10 vorgesehen, der von einem Impulsgeber 12 mit einem Impulszug 14 beaufschlagt wird. Ist anstelle der LEDs 4 ein anderer Verbraucher, beispielsweise eine Halogenglühlampe vorgesehen, der keine definierte Durchlaßrichtung besitzt, kann zusätzlich eine Sperrdiode in Reihe mit dem Verbraucher vorgesehen sein, um die Durchlaßrichtung des Verbrauchers zu definieren.

Der schnelle elektronische Schalter 10 selbst kann beispielsweise ein Transistor und insbesondere ein MOSFET-Transistor sein. Als besonders geeignet haben sich n-Kanal-MOSFETs gezeigt, weil sie zum einen preisgünstiger sind und zum anderen auch schneller schalten können als ein p-Kanal-MOSFET mit gleicher elektrischer Belastbarkeit. Zur Vermeidung von Verlusten sollte der schnelle elektronische Schalter 10 im leitenden Zustand nur einen sehr geringen Widerstand aufweisen. Er sollte ferner besonders kurze Ein- und Ausschaltzeiten haben, um einen besonders steilen Flankenanstieg und -abfall der Stromimpulse zu ermöglichen.

Die spezielle Art und Anzahl der LEDs 4 wird abhängig von den beabsichtigten Verwendungszweck gewählt. LEDs werden in unterschiedlichsten Farben und mit unterschiedlichsten Betriebsdaten geliefert. Dabei gibt es sogenannte "Weißlicht-LEDs" die ein weisses Licht liefern, wie es typischerweise für manche Beleuchtungszwecke besonders erwünscht ist.

Als Freilaufdiode eignet sich wegen ihrer hohen Schaltgeschwindigkeit und ihrer niedrigen Durchlaßspannung besonders eine Schottky-Diode. Es können jedoch auch grundsätzlich andere Dioden, vorzugsweise Fast Recovery Dioden, vorgesehen sein.

Konventionsgemäß ist in dem Stromkreis die obere Schiene 16 auf hohem Potential, während sich die untere Schiene 18 auf dem Bezugspotential oder Basispotential, beispielsweise der Erdung befindet.

Der Impulsgeber 12 kann ein übliches Bauteil sein, wie es konventionell in hohen Stückzahlen gefertigt und vertrieben wird. Er kann vorzugsweise einen Impulszug 14 generieren, der veränderbar ist. Beispielsweise können die Impulslängen variabel sein, d.h. eine Impulsbreitenmodulation ist möglich. Es ist alternativ auch möglich, bei konstanter Impulsbreite oder Impulsdauer die Pause zwischen den einzelnen Impulsen zu variieren. Der Impulsgeber 12 hat einen Ausgang 20 für den Impulszug 14 und einen sogenannten Feedback-Eingang 22, über den ein charakteristisches Signal für den durch die LEDs 4 fließenden Strom an den Impulsgeber 12 gelangt. Zu diesem Zweck befindet sich ein Gesamtstrom-Meßwiderstand 24 zwischen Source 26 des schnellen elektronischen Schalters 10 und Basispotential 18. Der Gesamtstrom-Meßwiderstand kann relativ klein ausgelegt sein.

Zur Stromversorgung ist der Impulsgeber 12 an einen Spannungsteiler angeschlossen, der aus einem einfachen Widerstand 28 und einer Zenerdiode 30 aufgebaut ist. Die Zenerdiode 30 bewirkt, daß dem Impulsgeber 12 eine im wesentlichen konstante Spannung zugeführt wird. Links der gestrichelten Linie in Fig. 1 ist die Gleichrichterschaltung 32 gezeigt, die im wesentlichen aus einer üblichen Brückenschaltung 34 und einem Glättungskondensator 36 aufgebaut ist. An die Eingänge 38, 40 kann Wechselspannung, beispielsweise die übliche Netzspannung, angelegt werden.

Bei Betrieb öffnet und schließt sich getaktet durch den Impulszug 14, der an das Gate 42 des schnellen elektronischen Schalters 10 angeschlossen ist, der schnelle elektronische Schalter 10. Ist der schnelle elektronische Schalter 10 geschlossen, kann Strom von dem hohen Potential 16 durch die LEDs 4 und die Spule 6 über den schnellen elektronischen Schalter 10 an das Basispotential 18 fließen. Dabei lädt sich die Spule 6 auf und bildet ein Magnetfeld aus. Wird der schnelle elektronische Schalter 10 geöffnet, d.h. der Stromfluß unterbrochen, so treibt die aufgeladene Spule 6 den Stromfluß weiter voran, und der Strom fließt durch die Freilaufdiode 8 zurück auf das hohe Potential. Generell bleibt somit der Stromfluß in diesem Stromkreis solange aufrecht, bis der Verbraucher dem Stromkreis die Energie entzogen hat, d. h. die in dem Magnetfeld der Spule 6 gespeicherte Energie verbraucht ist. Schließt sich der schnelle elektronische Schalter 10 wieder, beginnt der Strom wieder durch die LEDs 4, die Spule 6 und den schnellen elektronischen Schalter 10 vom hohen Potential 16 auf das Basispotential 18 zu fließen, und die Spule 6 wird erneut geladen.

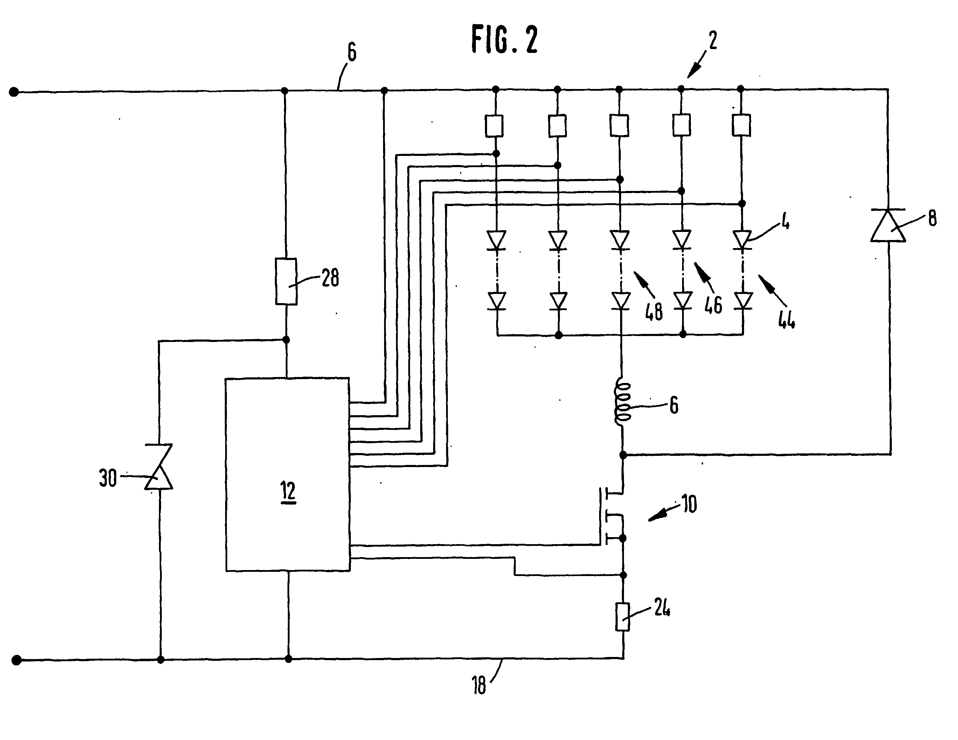

In der Fig. 2 ist ein alternatives Ausführungsbeispiel gezeigt. Man erkennt, daß mehrere Reihen 44, 46, 48 von LEDs 4 parallel zueinander vorgesehen sind. Bei dem gezeigten Ausführungsbeispiel ist zu allen Reihen 44, 46, 48 von LEDs 4 eine gemeinsame Spule 6 zugehörig. Gegenüber einer Ausführungsform mit je einer Spule 6 pro Reihe 44, 46, 48 von LEDs 4 hat ein solcher Aufbau mehrere Vorteile. Er ist durch die Einsparung der teuren Spulen 6 deutlich günstiger und kann in der Praxis auch kleiner gebaut werden. Es ist ferner bei dem gezeigten Ausführungsbeispiel zu jeder Reihe 44, 46, 48 ein eigener Teilstrom-Meßwiderstand 50 vorgesehen. Im übrigen ist der Aufbau der Schaltung nach dieser Figur relativ ähnlich des Aufbaus gemäß Fig. 1. Wie in Fig. 1 ist auch ein Gesamtstrom-Meßwiderstand 24 vorgesehen, der aber wahlweise auch fehlen kann. Man erkennt, wie von jedem der Teilstrom-Meßwiderstände 50 eine Informationsleitung 52 an den Impulsgeber 12 geführt ist. Der Impulsgeber 12 erhält somit von jeder einzelnen Reihe von LEDs eine Information über den Stromfluß durch die LEDs. Das ermöglicht, bei dem Ausfall beispielsweise einer LED in einer Reihe, die einen Stromfluß durch diese Reihe komplett unterbindet, daß der optimale Stromfluß von dem Impulsgeber 12 für die restlichen Reihen von LEDs 4 aufrechterhalten bleibt. Der Impulsgeber 12 hat dafür entweder integriert oder als separates Bauteil vorgesehen eine Auswerteeinrichtung, beispielsweise in Form eines integrierten Schaltkreises. Dieser integrierte Schaltkreis kann gleichzeitig so aufgebaut sein, daß er beispielsweise ein Fehlersignal erzeugt, falls eine der Reihen von Elektroden ausgefallen ist. Beispielsweise kann dieses Fehlersignal abgestuft sein, so daß die Fehlerintensität variiert, je nach dem ob eine oder mehrere Reihen ausgefallen sind. Das Fehlersignal kann beispielsweise von einem Monteur bei einer routinemäßigen Kontrolle erkannt werden. Es kann aber auch beispielsweise über eine Datenverbindung einer zentralen Überwachungsstelle zugeführt werden. Eine derartige "Fernwartung" erlaubt, insbesondere bei Verkehrssignalanlagen wie Ampeln, eine beträchtliche Einsparung der laufenden Unterhaltskosten.

Es sei darauf hingewiesen, daß die zu einer Reihe 44, 46, 48 gehörigen LEDs nicht zwangsläufig auch auf der Beleuchtungsseite, d.h. in der Leuchtanordnung, in Reihe miteinander angeordnet sein müssen. Vielmehr kann es günstig sein, die LEDs 4 einer Reihe 44, 46, 48 verstreut über die Gesamtanordnung der einzelnen LEDs zu verteilen, so daß der Ausfall einer einzelnen elektrischen Reihe bei der LED-Lichtquelle vom Betrachter nicht so leicht erkannt wird.

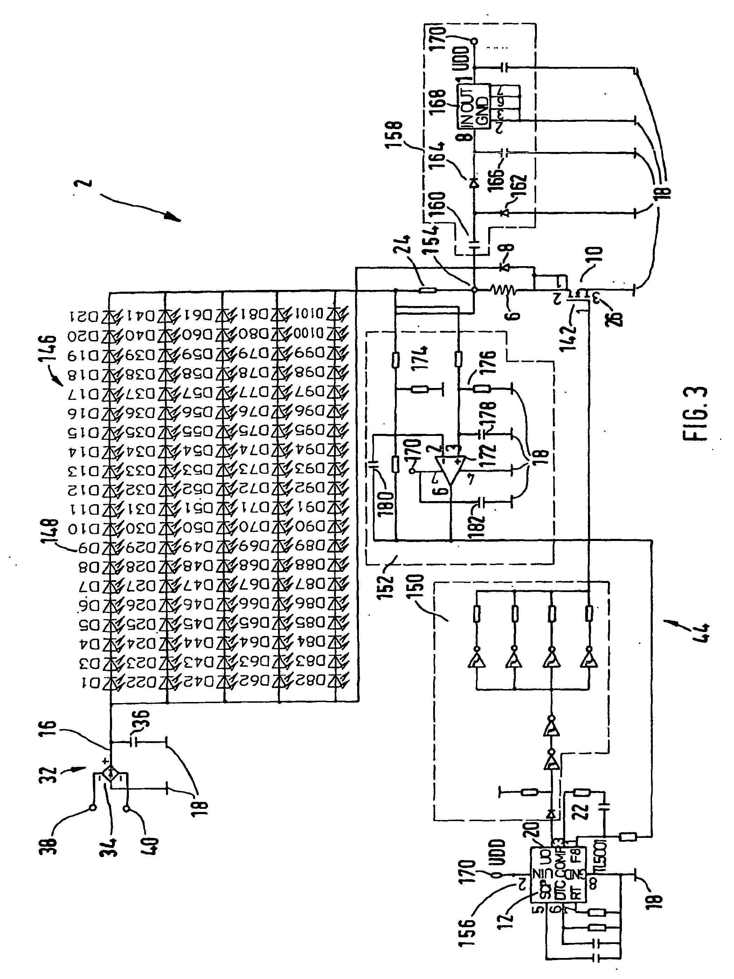

In der Fig. 3 ist der Schaltplan einer erfindungsgemäßen Lichtquelle 144 gezeigt, die unter Verwendung einer alternativen erfindungsgemäßen Stromversorgungsvorrichtung aufgebaut ist. Das Leuchtfeld 146 der Lichtquelle 144 ist aus einer Vielzahl einzelner LEDs 148 aufgebaut, die in insgesamt fünf parallelen Reihen zueinander angeordnet sind. Grundsätzlich entspricht die Vorrichtung gemäß Fig. 3 im wesentlichen der entsprechenden Vorrichtung von Fig. 1 oder 2. Entsprechend bezeichnen identische Bezugszeichen gleiche oder einander entsprechende Bauteile bzw. Merkmale. Man erkennt insbesondere links oben die Gleichrichterschaltung 32, und mehr auf der rechten Seite die Spule 6, den schnellen elektronischen Schalter 10, die Freilaufdiode 8 sowie den Meßwiderstand 24. Der Impulsgeber 12 mit dem Ausgang 20, über den der Impulszug 14 an das Gate 42 des schnellen elektronischen Schalters 10 angelegt ist, und dem Feedback-Eingang 22 sind ebenfalls gezeigt. Zwischen dem Ausgang 20 und dem Gate 42 ist mit unterbrochener Linie eine Treiberschaltung 150 gezeigt, mit der ein großer Strom zur Überwindung einer Eingangskapazität des schnellen elektronischen Schalters 10 generiert wird. Ebenfalls mit unterbrochenen Linien ist eine Operationsverstärkerschaltung 152 gezeigt, welche das eigentliche Feedbacksignal an den Impulsgeber 12 generiert und liefert. Anstelle der Operationsverstärkerschaltung 152 kann vorteilhaft zur Potentialtrennung auch ein linearer Optokoppler verwendet werden.

In Reihe mit dem Verbraucher, d. h. mit dem Diodenfeld 146, ist ein Anschluß 154 gezeigt, der über eine Spannungsreglerschaltung 158 an den Stromversorgungseingang 156 des Impulsgebers angeschlossen ist.
Darin liegt der wesentliche Unterschied der vorliegenden Schaltung verglichen mit der Schaltung der Fig. 1 oder 2. Verwendet man die Schaltung der Fig. 1 oder 2 zur Speisung des Leuchtdiodenfelds 146, so sind die Verluste in dem Widerstand 28 des Spannungsteilers annähernd so groß wie der Stromverbrauch des gesamten Leuchtdiodenfelds 146. Zwar hat die Gesamtschaltung immer noch einen extrem guten Wirkungsgrad der Lichterzeugung. Diese extrem gute Wirkungsgrad kann aber noch weiter dadurch verbessert werden, daß diese reinen Verluste am Widerstand 28 vermieden werden. Bei der Fig. 3 ist dieses Problem dadurch bewältigt, daß der Stromversorgungseingang für den Impulsgeber 12 statt von dem oberen Potential 16 an die Reihenschaltung von Verbraucher 146, Meßwiderstand 24, Spule 6 und schnellem elektronischen Schalter 10 beim Anschluß 154 angeschlossen ist. Dabei weist die Spannungsreglerschaltung 158 einen Entkopplungskondensator 160, eine Niveaudiode 162, eine Gleichrichterdiode 64 sowie einen Glättungskondensator 166 auf, die einem Spannungsregler-IC 168 vorgeschaltet sind.

Der Ausgang des Spannungsreglers-ICs ist an eine Versorgungsspannungsschiene 170 angeschlossen, von der aus zum einen der Impulsgeber 12 über den Stromversorgungseingang 156 versorgt wird, über den aber auch, wie nachfolgend beschrieben, beispielsweise der Operationsverstärker der Operationsverstärkerschaltung 152 versorgt wird.

Die Operationsverstärkerschaltung 152 weist als Hauptbestandteil den Operationsverstärker 172 auf. In der Zuleitung zu dem Operationsverstärker 172 befinden sich Spannungsteiler 174, 176. Ferner ist bei einer der Zuleitungen ein Kondensator 178 als Integrations- oder Glättungskondensator 178 vorhanden. Eine ähnliche Aufgabe erfüllt auch der Kondensator 180. Zur Vermeidung von parasitären Schwingungen des Operationsverstärkers 172 dient ein weiterer Kondensator 182.

Es gibt mehrere unterschiedliche Möglichkeiten, die beschriebene Stromversorgungsvorrichtung 2 zu betreiben. Einerseits kann es günstig sein, an den LEDs 4 bzw. dem Verbraucherausgang einen möglichst konstanten Strom zu liefern. Das dem entgegengesetzte Extrem ist ein gepulster Betrieb des Verbrauchers mit Stromimpulsen, wobei der Strom zwischen den einzelnen Impulsen jeweils auf Null zurückgeht. Durch entsprechende Wahl der Bauelemente kann jede der beiden Betriebsweisen erzielt werden. Darüberhinaus kann der Betrieb auch über den Impulsgeber 12, d. h. die Breite der einzelnen Impulse, die Länge der Impulspausen und das Tastverhältnis, gewählt werden. Es kann günstig sein, zu diesem Zweck in dem Stromkreis des Verbraucherausgangs 4, der Spule 6 und der Freilaufdiode 8 einen zusätzlichen Meßwiderstand vorzusehen und an diesem eine für den Strom in diesem Stromkreis charakteristische Größe abzunehmen. Diese Spannung kann an eine Logikschaltung weiteigegeben werden und den Impulsgeber 12 entsprechend ansteuern. Diese Art der Übewachung des Stromflusses über den Verbraucherausgang hat den besonderen Vorteil, daß ein sehr definierter Strom an den Verbaucher abgegeben werden kann, der in einem ganz bestimmten Bereich oder auf einem ganz bestimmten Niveau sicher gehalten werden kann. Manche Verbraucher, die eine sehr definiert Stromspeisung benötigen, lassen sich damit besonders gut und zuverlässig speisen, was die Betriebssicherheit und Lebensdauer solcher Geräte deutlich erhöht.

Üblicherweise wird man eine Betriebsweise wählen, bei der der Strom am Verbraucher beim Einschalten des Schalters auf einen Maximalwert ansteigt, und dann wieder abfällt, bevor vor dem Erreichen der Nullinie der Schalter erneut öffnet und der Strom am Verbraucher wieder ansteigt. Damit schwankt der Strom im wesentlichen mit der Freuqenz, mit der der schnelle elektronische Schalter 10 betätigt wird, um den Mittelwert des erforderlichen Betriebsstroms des Verbrauchers.

Die Stromversorgungsvorrichtung 2 kann entweder als ein separates Netzteil vorgesehen sein. Sie kann aber ebenso gut mit in die elektronischen Geräte beispielsweise in deren Gehäusen integriert sein. Insbesondere dort, wo die Verbraucher am öffentlichen Netz betrieben werden, ist es günstig, wenn in die Stromversorgungsvorrichtung 2 die Gleichrichterschaltung 32 integriert ist.

## Patentansprüche

1. LED-Lichtquelle (2), aufweisend:
(a) einen Eingang (38, 40) zum Anschluß einer Stromquelle;
(b) ferner, auf Potentialniveaus zwischen dem oberen Potential (16) und dem Basispotential (18):
- einen Strang von mehreren, in Reihe geschalteten LEDs (4);
- eine Spule (6), die in Reihe mit den LEDs (4) vorgesehen ist;
- eine Freilaufdiode, die parallel zu den LEDs (4) und der Spule (6) vorgesehen ist und deren Durchlaßrichtung der Durchlaßrichtung der LEDs (4) entgegengesetzt ist;
- und einen schnellen elektronischen Schalter (10), der in Reihe mit den LEDs (4), der Spule (6) und der zu den LEDs (4) und der Spule (6) parallelen Freilaufdiode (8) vorgesehen ist;
(c) und einen Impulsgeber (12), der an den schnellen elektronischen Schalter (10) angeschlossen ist und impulse erzeugt, die den schnellen elektronischen Schalter (10) öffnen und schließen,
**dadurch gekennzeichnet**,
(d) daß mehrere parallel geschaltete Stränge (44; 46; 48) vorgesehen sind, die jeweils mehrere in Reihe geschaltete LEDs (4) enthalten;
(e) daß eine gemeinsame Spule (6) für die Stränge (44; 46; 48) von LEDs (4) vorgesehen ist;
(f) und daß der Impulsgeber (12) ein Pulsbreiten-Modulator in Form eines integrierten Bauteils oder ein Frequenzmodulator in Form eines integrierten Bauteils ist.

2. Lichtquelle (2) nach Anspruch 1, **dadurch gekennzeichnet, daß** der Impulsgeber (12) so ausgebildet ist, daß er in Abhängigkeit von einer charakteristischen Größe für den durch die LEDs (4) fließenden Strom in der Lage ist, unterschiedliche Impulszüge (14) an den schnellen elektronischen Schalter (10) zu geben, um den mittleren Strom durch die LEDs (4) innerhalb eines konstanten Bereichs zu halten.

3. Lichtquelle (2) nach Anspruch 2, **dadurch gekennzeichnet, daß** in Reihe mit dem schnellen elektronischen Schalter (10), der Spule (6) und den LEDs (4) ein Gesamtstrom-Meßwiderstand (24) vorgesehen ist, über den der Strom durch die LEDs (4) gemessen wird.

4. Lichtquelle (2) nach einem der Ansprüche 1 bis 3, **dadurch gekennzeichnet, daß** ein Teilstrom-Meßwiderstand (50) in Reihe mit mindestens einem der LED-Stränge (44; 46; 48) angeordnet ist.

5. Lichtquelle (2) nach einem der Ansprüche 1 bis 4, **dadurch gekennzeichnet, daß** der Impulsgeber (12) an das hohe Potential (16) und das Basispotential (18) angeschlossen ist.

6. Lichtquelle (2) nach Anspruch 5, **dadurch gekennzeichnet, daß** zwischen dem hohen Potential (16) und dem Basispotential (18) ein Spannungsteiler mit einer zu dem Impulsgeber (12) parallel vorgesehenen Stabilisierungsdiode (30) zum Erzeugen einer im wesentlichen konstanten Versorgungsspannung für den Impulsgeber (12) vorgesehen ist.

7. Lichtquelle (2) nach einem der Ansprüche 1 bis 4, **dadurch gekennzeichnet, daß** der Impulsgeber (12) einen Stromversorgungseingang (156) aufweist, der an die Reihenschaltung von Ausgang der LEDs (4) und Spule (6) angeschlossen ist.

8. Lichtquelle (2) nach Anspruch 7, **dadurch gekennzeichnet, daß** dem Stromversorgungseingang (156) des Impulsgebers (12) vorgeschaltet eine Spannungsreglerschaltung (158) vorgesehen ist.

9. Lichtquelle (2) nach Anspruch 8, **dadurch gekennzeichnet, daß** die Spannungsregierschaltung (158) einen Entkopplungskondensator (160) aufweist.

10. Lichtquelle (2) nach Anspruch 8 oder 9, **dadurch gekennzeichnet, daß** die Spannungsreglerschaltung (158) einen Spannungsgleichrichter (164) aufweist.

11. Lichtquelle (2) nach Anspruch 10, **dadurch gekennzeichnet, daß** die Spannungsreglerschaltung (158) eine dem Spannungsgleichrichter (162) vorgeschaltete Niveaudiode (162) aufweist.

12. Lichtquelle (2) nach einem der Ansprüche 8 bis 11, **dadurch gekennzeichnet, daß** die Spannungsreglerschaltung (158) einen Spannungsregler-IC (168) aufweist.

13. Lichtquelle (2) nach einem der Ansprüche 1 bis 12, **dadurch gekennzeichnet, daß** sie für den Anschluß an das öffentliche Stromnetz vorgesehen ist und eine Gleichrichterschaltung (32) aufweist, deren Ausgänge das hohe Potential (16) und das Basispotential (18) bilden.

14. Lichtquelle (2) nach einem der Ansprüche 1 bis 13, **dadurch gekennzeichnet, daß** der Impulsgeber (12) so ausgebildet ist, daß die Wiederholfrequenz der Impulse größer ist als 130 Hz, vorzugsweise größer ist als 400 Hz, noch bevorzugter größer ist als 1 kHz, noch mehr bevorzugt größer ist als 10 kHz und ganz besonders bevorzugt größer ist als 1 MHZ.

15. Lichtquelle (2) nach einem der Ansprüche 1 bis 14, **dadurch gekennzeichnet, daß** der Impulsgeber (12) verstellbar ausgebildet ist, so daß durch eine Änderung der Impulszüge (14) die Intensität des Lichts variiert werden kann.

16. Lichtquelle (2) nach Anspruch 15, **dadurch gekennzeichnet, daß** der Impulsgeber (12) nach Maßgabe der herrschenden Lichtsituation automatisch verstellbar ist.

17. Lichtquelle (2) nach einem der Ansprüche 1 bis 16, **dadurch gekennzeichnet, daß** ein üblicher Befestigungssockel zur Verwendung mit einer üblichen Befestigungsfassung für Lichtquellen vorgesehen ist.

18. Lichtquelle (2) nach einem der Ansprüche 1 bis 17, **dadurch gekennzeichnet, daß** für mehrere parallel geschaltete LED-Stränge eine gemeinsame Spule (6) und eine gemeinsame Freilaufdiode (8) vorgesehen sind.

19. Verkehrssignalanlage, **dadurch gekennzeichnet, daß** sie mindestens eine LED-Lichtquelle (2) gemäß einem der Ansprüche 1 bis 18 aufweist.

## Claims

1. An LED light source (2), comprising:
(a) an input (38, 40) for connection of a current source;
(b) furthermore, at different potential levels between the upper potential (16) and the base potential (18):
- a string of a plurality of LEDs (4) connected in series;
- a coil (6) provided in series with the LEDs (4);
- a recovery diode provided in parallel to the LEDs (4) and the coil (6) and having its forward direction opposed to that of the LEDs (4);
- and a rapid electronic switch (10) provided in series with the LEDs (4), the coil (6) and the recovery diode (8) in parallel to the LEDs (4) and the coil (6); and
(c) a pulse generator (12) that is connected to the rapid electronic switch (12) and generates pulses that open and close the rapid electronic switch (10),
**characterized in**
(d) that there are provided several parallel-connected strings (44; 46; 48) each containing several series-connected LEDs (4);
(e) that there is provided a common coil (6) for said strings (44; 46; 48) of LEDs (4);
(f) and **in that** the pulse generator (12) is a pulse-width modulator in the form of an integrated component or a frequency modulator in the form of an integrated component.

2. The light source (2) of claim 1,
**characterized in that** the pulse generator (12) is designed such that it capable of applying different pulse trains (14) to the rapid electronic switch in accordance with a characteristic quantity of the current flowing through the LEDs (4), so as to maintain the average current through the LEDs (4) within a constant range.

3. The light source (2) of claim 2,
**characterized in that** an overall current measuring resistor (24) is provided in series with the rapid electronic switch (10), the coil (6) and the LEDs (4), by means of which the current flowing through the LEDs (4) is measured.

4. The light source (2) of any of claims 1 to 3,
**characterized in that** a partial current measuring resistor (50) is arranged in series with at least one of the LED strings (44; 46; 48).

5. The light source (2) of any of claims 1 to 4,
**characterized in that** the pulse generator (12) is connected to the high potential (16) and the base potential (18).

6. The light source (2) of claim 5,
**characterized in that**, between said high potential (16) and said base potential (18), there is provided a voltage divider having a stabilization diode (30) arranged in parallel to the pulse generator (12) for generating a substantially constant supply voltage for the pulse generator (12).

7. The light source (2) of any of claims 1 to 4,
**characterized in that** the pulse generator (12) has a power supply input (156) connected to the series connection of the output of the LEDs (4) and the coil (6).

8. The light source (2) of claim 7,
**characterized in that** a voltage regulating circuit (158) is connected upstream of the voltage supply input (156) of the pulse generator (12).

9. The light source (2) of claim 8,
**characterized in that** the voltage regulating circuit (158) comprises a decoupling capacitor (160).

10. The light source (2) of claim 8 or 9,
**characterized in that** the voltage regulating circuit (158) comprises a voltage rectifier (164).

11. The light source (2) of claim 10,
**characterized in that** the voltage regulating circuit (158) comprises a level diode (162) connected upstream of the voltage rectifier (162).

12. The light source (2) of any of claims 8 to 11,
**characterized in that** the voltage regulating circuit (158) comprises a voltage regulator IC (168).

13. The light source (2) of any of claims 1 to 12,
**characterized in that** it is provided for connection to the public mains and comprises a rectifier circuit (32) the outputs of which constitute the high potential (16) and the base potential (18).

14. The light source (2) of any of claims 1 to 13,
**characterized in that** the pulse generator (12) is designed such that the repetition frequency of the pulses is greater than 130 Hz, preferably greater than 400 Hz, more preferably greater than 1 kHz, still more preferably greater than 10 kHz and most preferably greater than 1 MHz.

15. The light source (2) of any of claims 1 to 14,
**characterized in that** the pulse generator (12) is designed to be adjustable such that the intensity of the light can be varied by variation of the pulse trains (14).

16. The light source (2) of claim 15,
**characterized in that** pulse generator (12) is adjustable automatically in accordance with the prevailing light situation.

17. The light source (2) of any of claims 1 to 16,
**characterized in that** a usual mounting base is provided for use together with a usual mounting socket for light sources.

18. The light source (2) of any of claims 1 to 17,
**characterized in that** a common coil (6) and a common recovery diode (8) are provided for several strings connected in parallel.

19. A traffic signal installation,
**characterized in that** it comprises at least one LED light source (2) according to any of claims 1 to 18.

## Revendications

1. Source lumineuse (2) à diodes électroluminescentes comprenant :
a) une entrée (38, 40) pour la connexion d'une source de courant ;
b) et, à des niveaux de potentiel compris entre le potentiel supérieur (16) et le potentiel de base (18) :
- une bande de plusieurs diodes électroluminescentes (4) couplées en série ;
- une bobine (6), qui est prévue en série avec les diodes électroluminescentes (4) ;
- une diode de roue libre, qui est prévue en parallèle avec les diodes électroluminescentes (4) et la bobine (6) et dont le sens passant est opposé au sens passant des diodes électroluminescentes (4) ;
- et un commutateur (10) électronique rapide, qui est prévu en série avec les diodes électroluminescentes (4), la bobine (6) et la diode de roue libre (8) connectée en parallèle avec les diodes électroluminescentes (4) et la bobine (6) ;
c) et un générateur d'impulsions (12) qui est connecté au commutateur (10) électronique rapide et produit des impulsions qui ouvrent et ferment le commutateur (10) électronique rapide,
**caractérisée par** le fait
d) qu'il est prévu plusieurs bandes (44 ; 46 ; 48) couplées en parallèle, qui comprennent chacune plusieurs diodes électroluminescentes (4) couplées en série ;
e) qu'il est prévu une bobine (6) commune pour les bandes (44 ; 46 ; 48) de diodes électroluminescentes (4) ;
f) et que le générateur d'impulsions (12) est un modulateur d'impulsion en durée sous la forme d'un composant intégré ou un modulateur de fréquence sous la forme d'un composant intégré.

2. Source lumineuse (2) selon la revendication 1, **caractérisée par le fait que** le générateur d'impulsions (12) est conçu de telle sorte que celui-ci, en fonction d'une grandeur caractéristique du courant qui traverse les diodes électroluminescentes (4), puisse délivrer des trains d'impulsions (14) différents au commutateur (10) électronique rapide, aux fins de maintenir le courant moyen qui traverse les diodes électroluminescentes (4) à l'intérieur d'une plage constante.

3. Source lumineuse (2) selon la revendication 2, **caractérisée par le fait qu'**il est prévu en série avec le commutateur (10) électronique rapide, la bobine (6) et les diodes électroluminescentes (4), une résistance de mesure de courant total (24), par l'intermédiaire de laquelle le courant qui traverse les diodes électroluminescentes (4) est mesuré.

4. Source lumineuse (2) selon une des revendications 1 à 3, **caractérisée par le fait qu'**une résistance de mesure de courant partiel (50) est montée en série avec au moins une des bandes (44 ; 46 ; 48) de diodes électroluminescentes.

5. Source lumineuse (2) selon une des revendications 1 à 4, **caractérisée par le fait que** le générateur d'impulsions (12) est connecté au potentiel élevé (16) et au potentiel de base (18).

6. Source lumineuse (2) selon la revendication 5, **caractérisée par le fait qu'**il est prévu entre le potentiel élevé (16) et le potentiel de base (18), un diviseur de tension avec une diode stabilisatrice (30) montée en parallèle avec le générateur d'impulsions (12), aux fins de produire une tension d'alimentation essentiellement constante pour le générateur d'impulsions (12).

7. Source lumineuse (2) selon une des revendications 1 à 4, **caractérisée par le fait que** le générateur d'impulsions (12) présente une entrée d'alimentation (156), qui est connectée au branchement série de la sortie des diodes électroluminescentes (4) et de la bobine (6).

8. Source lumineuse (2) selon la revendication 7, **caractérisée par le fait qu'**il est prévu un circuit de régulation de tension (158) placé en amont de l'entrée d'alimentation (156) du générateur d'impulsions (12).

9. Source lumineuse (2) selon la revendication 8, **caractérisée par le fait que** le circuit de régulation de tension (158) comporte un condensateur de découplage (160).

10. Source lumineuse (2) selon la revendication 8 ou 9, **caractérisée par le fait que** le circuit de régulation de tension (158) comporte un redresseur de tension (164).

11. Source lumineuse (2) selon la revendication 10, **caractérisée par le fait que** le circuit de régulation de tension (158) comporte une diode d'écrêtage (162) placée en amont du redresseur de tension (164).

12. Source lumineuse (2) selon une des revendications 8 à 11, **caractérisée par le fait que** le circuit de régulation de tension (158) comporte un circuit intégré régulateur de tension (168).

13. Source lumineuse (2) selon une des revendications 1 à 12, **caractérisée par le fait qu'**elle est prévue pour être connectée au réseau de distribution public et présente un circuit redresseur (32), dont les sorties forment le potentiel élevé (16) et le potentiel de base (18).

14. Source lumineuse (2) selon une des revendications 1 à 13, **caractérisée par le fait que** le générateur d'impulsions (12) est conçu de telle sorte que la fréquence de répétition des impulsions soit supérieure à 130 Hz, de préférence supérieure à 400 Hz, mieux supérieure à 1 kHz, mieux encore supérieure à 10 kHz et surtout supérieure à 1 MHz.

15. Source lumineuse (2) selon une des revendications 1 à 43, **caractérisée par le fait que** le générateur d'impulsions (12) est réglable, de telle sorte que l'intensité de la lumière peut être modifiée par une modification des trains d'impulsions (14).

16. Source lumineuse (2) selon la revendication 15, **caractérisée par le fait que** le générateur d'impulsions (12) est réglable de manière automatique en fonction de la luminosité ambiante.

17. Source lumineuse (2) selon une des revendications 1 à 16, **caractérisée par le fait qu'**il est prévu un socle de fixation courant pour une utilisation avec une douille courante pour sources lumineuses.

18. Source lumineuse (2) selon une des revendications 1 à 17, **caractérisée par le fait qu'**il est prévu, pour plusieurs bandes de diodes électroluminescentes couplées en parallèle, une bobine (6) commune et une diode de roue libre (8) commune.

19. Installation de feux de circulation, **caractérisée par le fait qu'**elle comporte au moins une source lumineuse à diodes électroluminescentes (2) selon une des revendications 1 à 18.
